**Europäisches Patentamt**

(19) **European Patent Office**

**Office européen des brevets**

(11) Numéro de publication: **0 017 601**
**B1**

(12) **FASCICULE DE BREVET EUROPEEN**

(45) Date de publication du fascicule du brevet:
08.06.83

(51) Int. Cl.³: **B 24 B 5/35,** B 23 Q 7/04

(21) Numéro de dépôt: **80420037.6**

(22) Date de dépôt: **21.03.80**

(54) Dispositif d'alimentation et de transfert pour machine à rectifier sans centre, et les machines comportant ce dispositif.

(30) Priorité: **02.04.79 FR 7908697**

(43) Date de publication de la demande:
**15.10.80 Bulletin 80/21**

(45) Mention de la délivrance du brevet:
**08.06.83 Bulletin 83/23**

(84) Etats contractants désignés:
**DE GB IT SE**

(56) Documents cités:
**BE-A-533 159**
**BE-A-550 639**
**FR-A-2 112 516**
**GB-A-1 006 149**
**US-A-2 642 179**
**US-A-2 704 955**
**US-A-2 991 892**
**US-A-3 075 321**
**US-A-3 488 893**

(73) Titulaire: **MICROREX S.A. (société anonyme), 33 rue Gauthier Dumont, F-42100 Saint Etienne (FR)**

(72) Inventeur: **Rosaz, Stéphane, 25 cours Fauriel, F-42100 Saint Etienne (FR)**

(74) Mandataire: **Buttet, Roger et al, "Cabinet Charras" 3, Place de l'Hôtel-de-Ville, F-42000 Saint-Etienne (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Dispositif d'alimentation et de transfert pour machines à rectifier sans centre, et les machines comportant
ce dispositif.

L'invention concerne un dispositif d'alimentation et de transfert pour machines à rectifier sans centre, et les machines comportant ce dispositif.

De nombreux problèmes apparaissent dans les machines à rectifier sans centre, lorsqu'il s'agit de rectifier des portées cylindriques ou non sur des pièces de formes tourmentées, notamment des pièces dont le centre de gravité est situé en dehors de la ou des parties à rectifier, telles que les pièces à branches multiples, radiales ou non, les pièces axiales avec proéminence extrême et en particulier les pièces appelées «tripodes» qui sont utilisées dans l'industrie automobile, au niveau du joint de cardan des arbres de roues.

En général, ces pièces sont rectifiées sur des machines entre pointes, ce qui nécessite, après forgeage, fonderie ou autres formes de fabrication, de reprendre ces pièces pour exécuter les trous de centrage, d'où augmentation du prix de revient. D'autre part, la rectification entre pointes, n'autorise pas un rendement intéressant, du fait des nombreuses manipulations nécessaires pendant l'usinage.

Un dispositif d'alimentation et de transfert pour machines à rectifier sans centre comportant les caractéristiques du préambule de la première revendication est déjà connu du BE-A-550 639.

On a bien pensé à améliorer le rendement et le prix de revient en créant une machine à rectifier dont les meules d'entraînement et de travail tournent dans un plan horizontal, afin de mieux dégager l'espace entre les meules, pour équiper la machine de moyens d'alimentation automatique de pièces à rectifier.

Ce but est obtenu par un dispositif selon le préambule de la revendication 1 comportant les caractéristiques de la partie caractérisante de la revendication 1.

L'invention est exposée ci-après plus en détail, à l'aide de dessins représentant seulement un mode d'exécution.

La fig. 1 est une vue de face en élévation illustrant l'ensemble du dispositif;

la fig. 2 est une vue en coupe considérée suivant la ligne brisée 2–2 de la fig. 4, montrant le chariot, la broche et leurs organes de commande en translation et en rotation;

la fig. 3 est une vue en coupe considérée suivant la ligne 3–3 de la fig. 1, illustrant le chariot, la broche et les moyens de guidage et de positionnement des pièces à rectifier;

la fig. 4 est une vue en plan de l'ensemble du dispositif porté par la machine;

les figs. 5 et 6 sont des vues en coupes partielles considérées respectivement suivant les lignes 5–5 et 6–6 de la fig. 4, montrant l'entraînement en rotation des broches centrales;

la fig. 7 est une vue en perspective illustrant à titre d'exemple, une pièce tripode et son moyen de préhension temporaire;

la fig. 8 est une vue partielle à plus grande échelle, montrant un détail de positionnement des moyens de guidage en rotation des pièces à rectifier;

la fig. 9 est une vue en coupe considérée suivant la ligne 9–9 de la fig. 8;

la fig. 10 est une vue en coupe illustrant le magasin et le moyen de distribution des pièces;

la fig. 11 est une vue en plan et en coupe considérée suivant la ligne 11–11 de la fig. 10, montrant les commandes d'ouverture du magasin et du moyen de distribution;

la fig. 12 est une vue en plan et en coupe considérée suivant la ligne 12–12 de la fig. 10, illustrant le fond du magasin et le moyen de distribution;

les figs. 13 à 20 sont des schémas illustrant les différentes phases du cycle mis en œuvre pour rectifier des tripodes en série.

Pour la clarté des dessins, on n'a pas illustré la machine à rectifier dans son ensemble, étant entendu qu'elle est connue en elle-même et que le dispositif suivant l'invention s'adapte sur son châssis.

Le dispositif d'alimentation et de transfert illustré est conçu pour rectifier successivement les trois portées de pièces tripodes, avec trois couples de meules, mais il est bien évident que ces opérations peuvent être exécutées sur un seul couple de meules.

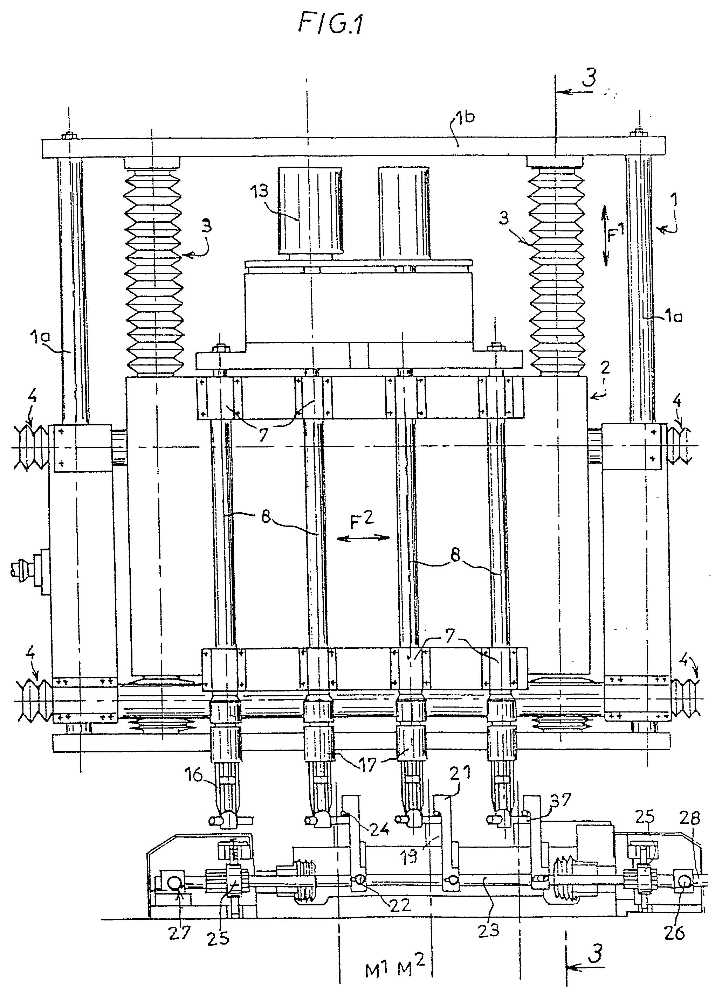

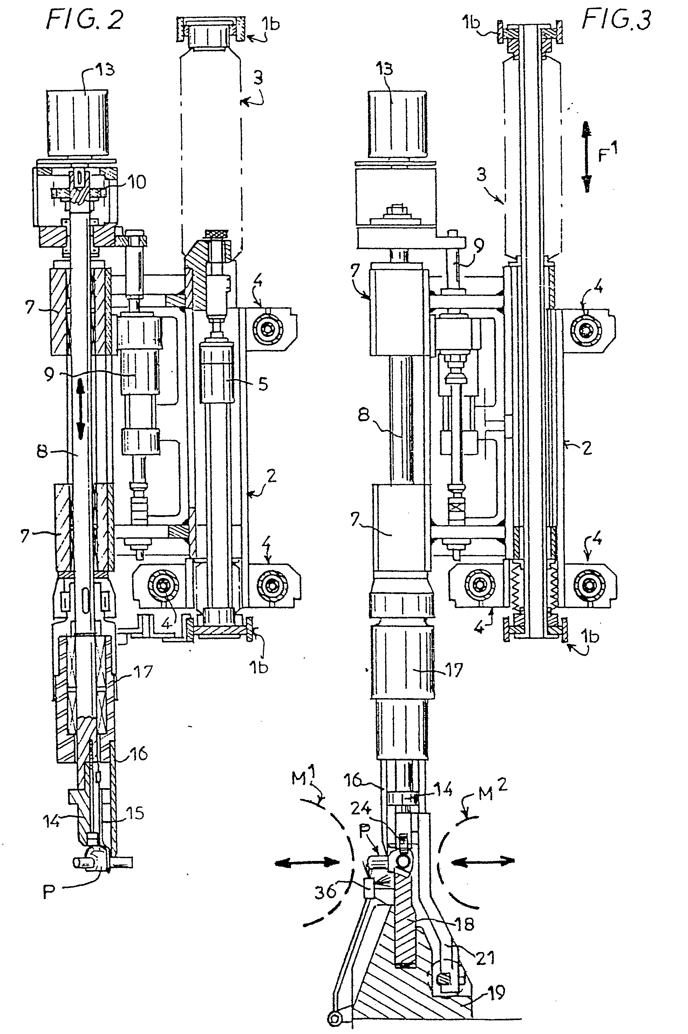

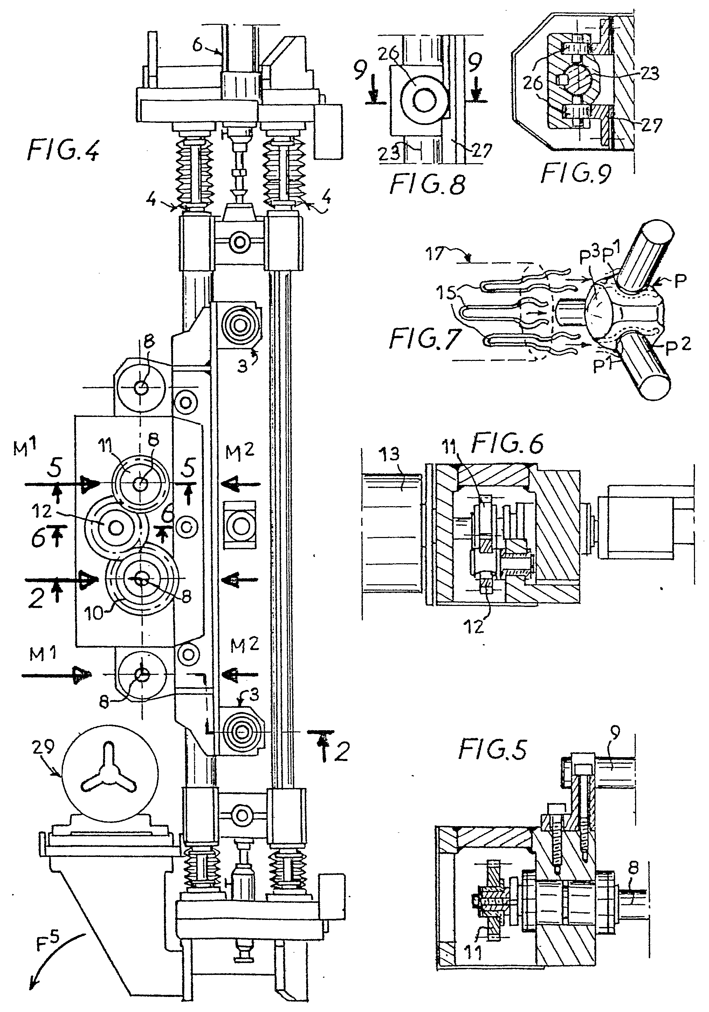

Ont voit notamment aux figs. 1, 2, 3 et 4, un cadre désigné par 1 dans son ensemble, comprenant deux montants 1a reliés à des traverses 1b et sur lequel est monté un chariot 2 animé de mouvements orthogonaux, à savoir, un mouvement rectiligne alternatif vertical (flèche F1) et un mouvement rectiligne alternatif horizontal (flèche F2), par son montage sur des colonnes à soufflets verticales 3 et horizontales 4, mues par des vérins double-effet 5 (fig. 2) et 6 (fig. 4), ou moyens similaires.

En avant des colonnes, le chariot porte par des paliers 7, des broches désignées dans les ensembles par le repère 8, qui sont au nombre de quatre, également espacées et qui sont reliées à un vérin double-effet 9 ou organe équivalent, pour autoriser leurs translations rectilignes alternatives dans le sens vertical (flèche F3, fig. 2), indépendamment du chariot.

Les deux broches centrales sont équipées à leur partie supérieure de pignons 10 et 11 reliés à un pignon central relais 12 pour tourner dans le même sens (figs. 2, 4, 5, 6). Un de ces pignons, le pignon 10 par exemple, est relié à un moteur électrique ou autre 13, du type pas à pas; les broches latérales étant fixes en rotation.

A leur partie inférieure, les broches 8 constituent des éléments porte-pinces 14 (fig. 2) équipés d'épingles en fil élastique 15 conformées à leur extrémité libre pour s'engager élastiquement autour des gorges P1 exécutées sur les pièces P à rectifier, entre les portées radiales P2 et le moyeu P3, comme illustré à la fig. 7.

On voit à la fig. 2, que lorsqu'une pièce P est maintenue par les épingles, un secteur 16 solidaire d'un fourreau 17 relié au palier 7, s'appuie sur l'une au moins des portées P2. Cette disposition permet par montée des broches 8 seules (par le vérin 9), de libérer les pièces des épingles de retenue.

Les pièces à rectifier sont posées, par les broches, sur une règle 18 (figs. 1 et 3), portée par un support 19, solidaire du châssis, et y sont maintenues par des organes d'appui 20 comprenant un bras 21 relié en 22 à un axe transversal 23 (fig. 1) et portant à rotation libre ou non, un galet 24 ou organe similaire s'appuyant sur la portée à rectifier pendant tout le temps de l'usinage, donc sans l'empêcher de tourner sous l'effet des meules de travail M1 et d'entraînement M2 (fig. 3).

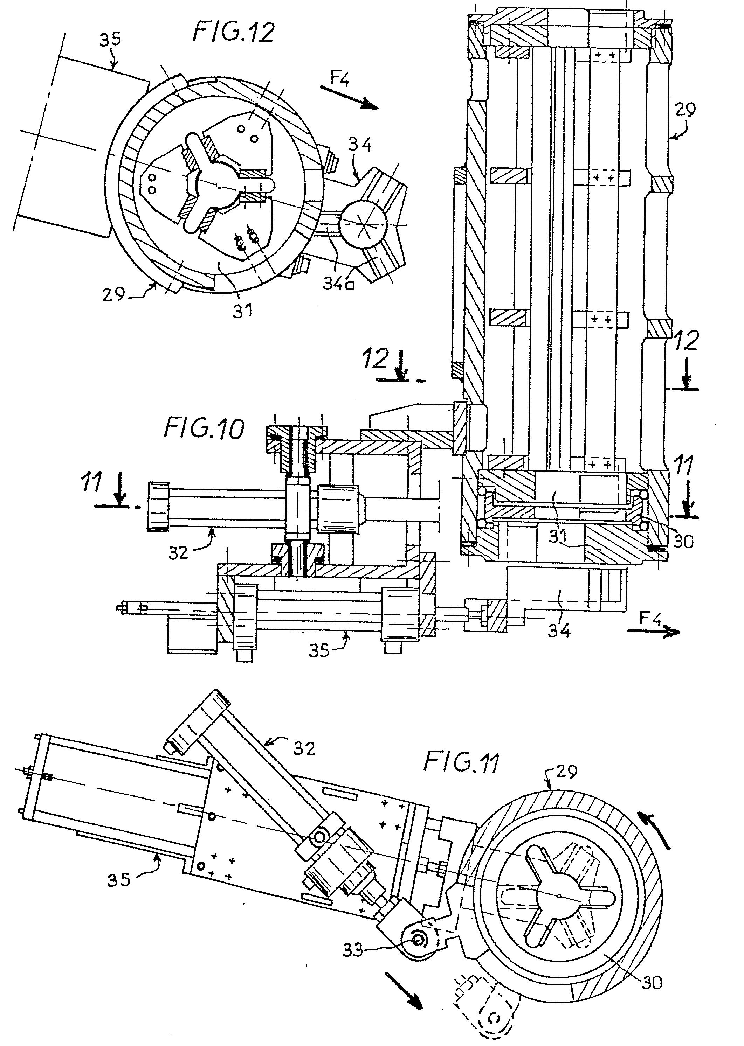

L'axe 23 est relié près de chaque extrémité à des paliers mobiles 25 permettant un déplacement vertical et en translation de l'axe, en vue de libérer les pièces rectifiées. Le déplacement de l'axe est assuré par des galets 26 ou similaires, tournant en bout de l'axe 23 et roulant sur des rampes ou supports étagés 27 (figs. 8 et 9 notamment). L'axe 23 est entraîné en translations alternatives par un vérin 28 ou organe équivalent (fig. 1).

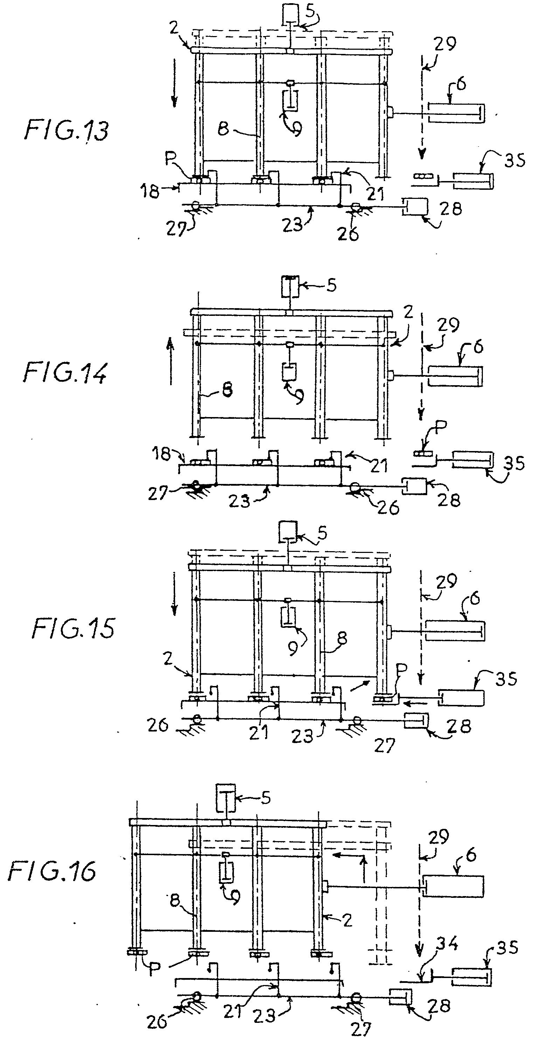

Le dispositif comprend encore, un magasin vertical 29 destiné à recevoir les pièces tripodes empilées à plat au-dessus d'un organe obturateur 30 monté entre deux bagues de guidage 31 (fig. 10). A cet effet, les bagues 31 et l'obturateur 30 présentent des ouvertures de la forme des pièces à rectifier et, dans la position d'obturation, c'est-à-dire de non distribution de pièces à rectifier, l'obturateur a ses ouvertures décalées par rapport à celles des bagues 31 (fig. 11). Lorsqu'on veut libérer une pièce du magasin, il suffit d'agir sur un vérin 32 ou organe équivalent relié à articulation en 33 à l'obturateur, pour faire coïncider les ouvertures des bagues et de l'obturateur (position en traits interrompus, fig. 11).

La pièce libérée tombe alors dans une nacelle 34 à logements 34a de positionnement des portées P2, qui est disposée en dessous et reliée à un vérin 35 ou moyen similaire, destiné à amener la nacelle et la pièce qu'elle porte, dans l'alignement de la première broche, et avec une portée P2 perpendiculaire à l'axe des meules (flèche F4, figs. 10 et 12).

A noter encore que le magasin est monté pivotant pour s'écarter du lieu de travail en facilitant l'accès aux organes essentiels (flèche F5, fig. 4).

D'autres organes nécessaires à la mise en œuvre de la rectification, ressortiront de la description du fonctionnement ci-dessous, illustré par les schémas des figs. 13 à 20, où l'on a montré un cycle dans lequel quatre pièces sont manipulées, c'est-à-dire qu'on a pris le cycle suivant l'introduction des premières pièces de la série.

A la fig. 13, on a représenté une pièce en attente dans le magasin 29 (figuré par la flèche en traits interrompus), le chariot 2 en position basse, c'est-à-dire avec les pièces en position sur la règle 18, encore tenues par les épingles des broches 8 et plaquées par les bras à galets 21 reliés à l'axe 23 position basse des rampes 27.

Dans cette position, trois pièces sont disposées sur la règle 18 en butée transversale d'alignement avec les meules (repère 37) et sont prêtes à être rectifiées suivant une de leurs portées, il suffit pour cela de monter les porte-pinces par le vérin 9, pour libérer les pièces, et de remonter·le chariot 2 par le vérin 5 (fig. 14).

Dans cette phase, on comprend que la pièce la plus proche du magasin (sous la deuxième broche), sera rectifiée sur sa première portée, la pièce suivante sera rectifiée sur sa deuxième portée, après rotation de 120 degrés dans un sens ou dans l'autre de la broche qui l'a mise en place sur la règle, cela par le moteur pas à pas 13 et le pignon d'entraînement 10, et la troisième pièce sera rectifiée sur la portée restante par rotation de sa broche de mise en place dans le sens approprié (par le pignon-relais 12 et le pignon d'antraînement 11 reliés au moteur). Le sens de cette dernière orientation est commandé automatiquement par les ordres arrivant d'une cellule (non représentée) située sous une broche centrale, en face d'une portée et distinguant sa qualité de surface (brillante pour rectifiée, mate pour brute).

A noter que pour renforcer la sécurité de position, le pignon central 12 est indexé en position par tous moyens tels que doigt poussé par un vérin (non représenté).

L'opération de rectification étant terminée sur ces trois pièces, les meules s'écartent et les pièces s'arrêtent. Or, l'arrêt des pièces ne s'opère pas forcément dans une position horizontale pour la préhension par les épingles. Il faut donc orienter les pièces; pour cela, une soufflerie 36 disposée convenablement (fig. 3) et présentant deux sorties ou buses divergentes, sont chargées d'opérer cette orientation; un détecteur (non représenté) contrôle la position horizontale des pièces et envoie l'ordre de commande de descente du chariot 2 pour saisir les pièces. Parallèlement, le magasin 29 a libéré une pièce, laquelle est amenée sous la première broche par la nacelle 34 et le vérin 35 pour être saisie en même temps que les trois autres (fig. 15), après déplacement des bras d'appui 21 par le vérin 28, provoquant le passage des galets 26 sur la partie haute des rampes 27, pour dégager le passage des pièces.

Le chariot 2 est alors remonté avec les quatre pièces tenues en bout des broches (position traits interrompus, fig. 16) et déplacé en translation (par le vérin 6), pour amener le broche 8 la plus proche du magasin, dans l'alignement du premier couple de meules, tandis que la nacelle 34 reprend sa place sous le magasin 29 (fig. 16).

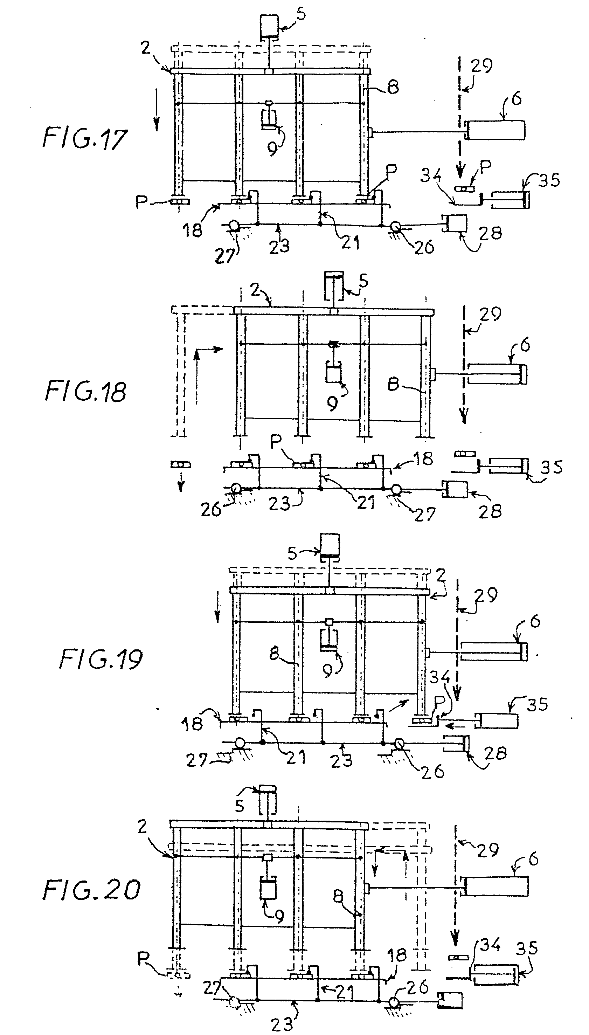

Le chariot 2 est ensuite descendu pour disposer les trois pièces à rectifier sur la règle 18 où elles sont maintenues par les bras 21 ramenés en position basse, tandis qu'une autre pièce est en attente dans le magasin, et que la pièce entièrement rectifiée est située en dehors de la règle, en général au-dessus d'un plan incliné de stockage (fig. 17).

On libère ensuite les pièces par actionnement du vérin 9 de commande des broches seules, et on remonte le chariot 2 (position en traits interrompus, fig. 18), pour le ramener dans la position où la première broche est prête à saisir une pièce amenée par la nacelle (fig. 18).

La rectification suivante étant effectuée, on descend le chariot (après que les souffleries et détecteurs aient positionné les pièces à plat), pour saisir les trois pièces usinées ainsi qu'une pièce amenée par la nacelle (fig. 19), les bras d'appui étant en position haute de dégagement.

Le cycle recommence alors, comme illustré à la fig. 20, c'est-à-dire: remontée du chariot avec les pièces accrochées, translation du chariot pour amener la pièce nouvelle dans l'alignement du premier couple de meules, descente du chariot dans cette position, libération des pièces, rectification...

De nombreuses variantes peuvent être introduites dans le cadre de l'invention, par exemple: les moyens de préhension temporaire des pièces peuvent être constitués par des aimants permanents commandés depuis l'armoire, l'orientation à plat des pièces rectifiées peut s'opérer également par aimants permanents, les déplacements des divers organes amovibles peuvent être obtenus par d'autres moyens que les vérins.

### Revendications

1. Dispositif d'alimentation et de transfert pour machines à rectifier sans centre, et les machines comportant ce dispositif, du type comprenant un chariot porté et guidé par un cadre mobile pour être déplacé suivant des trajectoires déterminées, ledit chariot portant des broches mobiles par rapport du chariot et dont l'extrémité inférieure est équipée de moyens de préhension et de retenue temporaire de pièces du type tripode, en vue de la rectification de leurs portées cylindriques, lesdites pièces étant positionnées à chaque poste sur un support placé entre les meules de rectification, lesdites pièces à rectifier étant amenées à l'entrée du dispositif par un moyen de sélection et de distribution, ces divers éléments ainsi que les organes classiques de la machine à rectifier, étant asservis par tous moyens selon un cycle déterminé; le dispositif est caractérisé par les éléments combinés suivant lesquels: le chariot (2) porté par un cadre mobile (1) est déplaçable en translations alternatives horizontales et verticales, de manière orthogonale, par des vérins double effet (5) associés aux éléments de guidage, tandis que les broches (8), portées par des paliers (7) du chariot (2), sont mobiles dans le sens vertical par liaison avec un vérin double effet (9); les moyens de préhension et de retenue temporaire des pièces (P) sont constitués par des pinces (14) ou épingles (15) en matériau à capacité élastique, conformées pour s'engager élastiquement autour des gorges (P1) séparant les portées cylindriques à rectifier (P2) du moyeu (P3) des pièces, tandis qu'un secteur (16) solidaire d'un fourreau (17) des paliers (7) est placé au-dessus des portées (P2) pour libérer les pièces des épingles, par remontée des broches (8) seules; les pièces (P) tenues par les broches (8), sont posées en butée transversale sur une règle (18), et maintenues à rotation libre sur cette règle, par appui sur les portées à rectifier de l'extrémité profilée de bras (21) mobiles en translation et en hauteur par liaison d'un vérin (28) avec un axe porte-bras (23) porté par des paliers mobiles (25) et des galets (26) roulant sur des rampes (27); le moyen de sélection et de distribution des pièces étant interposé entre un magasin (29) et la première broche de préhension des pièces.

2. Dispositif suivant la revendication 1, caractérisé en ce que les broches (8) sont équipées à leur extrémité libre d'aimants permanents pour saisir ou lâcher les pièces (P) à rectifier.

3. Dispositif suivant la revendication 1, caractérisé en ce que le chariot comprend quatre broches (8) porte-pièces, les broches latérales étant fixes en rotation, tandis que les deux broches centrales sont équipées à leur partie supérieure, de pignons (10, 11) entraînés par un pignon-relais (12); l'un de ces pignons (10) étant relié à un moteur pas à pas (13) destiné à entraîner en rotations limitées à 120 degrés, les pièces à rectifier, afin de présenter l'une des portées (P2) en position de rectification.

4. Dispositif suivant la revendication 3, caractérisé en ce qu'une cellule est disposée sur la règle (18) dans l'alignement avec une broche centrale ou encore le deuxième couple de meules, afin de détecter par effet de brillance, dans quel sens doit tourner ladite broche pour présenter convenablement la troisième portée à rectifier.

5. Dispositif suivant la revendication 1, caractérisé en ce qu'après rectification des portées, les pièces arrêtées en position quelconque, sont automatiquement disposées à plat pour être aisément saisies par les organes de préhension, par l'intermédiaire de souffleries (36) divergentes, convenablement disposées sous les pièces; la position horizontale étant contrôlée par des détecteurs commandant la descente du chariot (2).

6. Dispositif suivant la revendication 1, caractérisé en ce que le moyen de sélection des pièces est composé d'un magasin vertical (29) dans lequel les pièces sont empilées à plat au-dessus d'un organe obturateur (30) pivotant par vérin (32) ou similaire, afin de libérer périodiquement une pièce par coïncidence de ses ouvertures aux formes de la pièce avec des ouvertures analogues formées sur des bagues (31) fixes entre lesquelles pivote l'obturateur (30).

7. Dispositif suivant les revendications 1 et 6 ensemble, caractérisé en ce que le moyen de distribution des pièces libérées par l'obturateur du magasin (29) est constitué par une nacelle (34) située sous le magasin (29) et conformée pour recevoir et indexer les pièces avec une portée en position parallèle à l'axe des meules, ladite nacelle (34) étant amenée dans l'alignement de la broche ou de la première broche, par un vérin (35) ou un organe similaire.

8. Dispositif suivant l'une quelconque des revendications 1 à 7, caractérisé par le cycle conçu pour effectuer la rectification de trois pièces et la manipulation de quatre pièces, et qui comprend successivement: descente du chariot (2) avec prise d'une pièce amenée par la nacelle (34) et des trois pièces rectifiées, les bras d'appui (21) portés par la règle (18) étant relevés; remontée du chariot (2) avec les quatre pièces tenues par les broches (8); puis translation du chariot (2) pour amener la première broche dans l'alignement du premier couple de meules, et rotation des broches centrales pour orientation; descente du chariot (2) pour placer les trois pièces à rectifier sur la règle (18) où elles sont maintenues par les bras (21) en position abaissée; libération des pièces, dont la dernière entièrement rectifiée, par remontée des broches seules; remontée et translation du chariot (2) pour revenir en position de départ; rectification des pièces; orientation à plat des pièces rectifiées; descente du chariot (2) pour saisir les pièces rectifiées et la nouvelle pièce amenée par la nacelle, et ainsi de suite.

**Claims**

1. Feeding and transfer device for centerless grinding machine, and the machines having this device, of the type comprising a carriage supported and guided within a movable frame to be moved along pre-determined paths, said carriage being adapted for supporting movable spindles relative to the carriage, the lower end of which is provided with temporary gripping and retaining means for parts of the tripod type for the grinding of the cylindrical working surfaces thereof, said parts being positioned at each station upon a support placed between the grinding wheels, said parts to be ground being brought to the inlet of the device by selection and distribution means, these various elements as well as the conventional organs of the grinding machine being controlled by any convenient means in accordance with a pre-determined sequence; said device being characterized in that the various combined elements are arranged as follows: the carriage (2) supported by a movable frame (1) is adapted to be shifted in alternate horizontal and vertical translations in an orthogonal manner by double acting pressure cylinders (5) associated with the guiding elements, while the spindles (8) supported by bearings (7) of the carriage (2) are movable in the vertical direction through connection with a double acting pressure cylinder (9); the temporary gripping and retaining means for the parts (P) are constituted by pincers (14) or clips (15) made of a material having a resilient capacity and adapted to be engaged elastically around grooves (P1) separating the cylindrical working surfaces to be ground (P2) from the hub (P3) of the parts, while a sector (16) integral with a bushing (17) of the bearings (7) is placed above the working surfaces (P2) to make the parts free from the clips by upward motion of the spindles (8) only the parts (P) maintained by the spindles (8) are placed in transverse abutment upon a ruler (18) and held for free rotation upon this ruler, through abutment against the working surfaces to be ground of the contoured end of the arm (21), said parts being movable vertically and in translation through the connection of a pressure cylinder (28) with an arm-holder (23) supported by movable bearings (25) and rollers (26) rolling upon ramps (27); the selection and distribution means for the parts being interposed between a magazine (29) and the first spindle for gripping the parts.

2. Device as claimed in Claim 1, characterized in that the spindles (8) are provided at the free end thereof with permament magnets for gripping or releasing the parts to be ground (P).

3. Device as claimed in Claim 1, characterized in that the carriage comprises four part-holding spindles (8), the lateral spindles being fixed in rotation, while the two central spindles are provided at the upper portion thereof with gears (10, 11) driven by an idlergear (12), one of these gears (10) being connected to a step by step motor (13) the purpose of which is to drive in rotations restricted to 120 degrees the parts to be ground, in order to present in the grinding position one of the working surfaces (P2).

4. Device as claimed in Claim 3, characterized in that a cell is disposed on the ruler (18) in alignment with a central spindle or still the second pair of grinding wheels in order to detect by a brilliancy effect the direction in which said spindle must be rotated to present in a suitable manner the third working surface to be ground.

5. Device as claimed in Claim 1, characterized in that after the grinding of the working surfaces, the parts stopped in any position are automatically laid flat to be easily gripped by the gripping organs, through the intermediary of divergent blowers (36) conveniently disposed under the parts, the horizontal position being controlled by sensors through which the lowering of the carriage (2) is monitored.

6. Device as claimed in Claim 1, characterized in that the means for selecting the parts is comprised of a vertical magazine (29) wherein the parts are stacked flat above a closing organ (30) pivoted by a pressure cylinder (32) or the like, in order to release periodically a part through registering of its apertures with the contours of the part and with similar apertures formed on fixed bushings (31) between which the closing organ (30) is pivoted.

7. Device as claimed in Claims 1 and 6 together, characterized in that the means for distributing the parts released by the closing organ of the magazine (29) is constituted by a nacelle (34) located beneath the magazine (29) and adapted for receiving and indexing the parts with a working surface in a position parallel with the axis of the grinding wheels, said nacelle (34) being brought within the alignment of the spindle or of the first spindle by means of a pressure cylinder (35) or similar organ.

8. Device as claimed in any one of the Claims 1 to 7, characterized by the sequence designed for the grinding of three parts or the handling of four parts, said sequence comprising in succession: lowering of the carriage (2) with gripping of a part brought by the nacelle (34) and of the three ground parts, the abutment arms (21) supported by the ruler (18) being lifted up; upward motion of the carriage (2) with the four parts maintained by the spindles (8); then translation of the carriage (2) for bringing the first spindle within the alignment of the first pair of grinding wheels and rotation of the central spindles for orientation; lowering of the carriage (2) to place the three parts to be ground upon the ruler (18) where they are maintained by the arms (21) in lowered position; release of the parts, the last one of which is entirely ground, by upward motion of the spindles only; upward motion and translation of the carriage (2) in order to be returned to the starting position; grinding of the parts; orientation in a flat position of the ground parts; lowering of the carriage (2) to grip the ground parts and the further part brought by the nacelle, and so on.

**Patentansprüche**

1. Zuführungs- und Übertragungsvorrichtung für spitzenlose Schleifmaschinen, und die mit dieser Vorrichtung versehenen Maschinen, in der Ausführung, die einen in einem beweglichen Rahmen getragenen und geführten Schlitten zur Bewegung gemäss bestimmten Strecken aufweist mit in bezug auf den Schlitten durch letzteren getragenen beweglichen Spindeln derer Unterende mit Mitteln zum vorübergehenden Greifen und Halten von dreibeinartigen Teilen für das Abschleifen derer zylindrischen Auflageflächen versehen ist, wobei diese Teile bei jeder Station auf einen zwischen den Schleifscheiben befindlichen Träger eingerichtet werden nachdem sie am Eintritt der Vorrichtung durch ein Auswahl- und Verteilungsmittel gebracht worden sind, mit Ansteuerung dieser verschiedenen Bestandteile sowie der herkömmlichen Organe der Schleifmaschine durch beliebige Systeme und gemäss einer bestimmten zyklischen Arbeitsweise, und die besagte Vorrichtung durch die Zusammenarbeit der folgenden kombinierten Bestandteile gekennzeichnet ist: der von einem beweglichen Rahmen (1) getragenen Schlitten (2) wird in abwechselnden waagrechten und senkrechten Verlegungen in einer rechteckigen Weise von doppelwirkenden Zylindern (5) bewegt, die mit den Führungselementen verbunden sind, wobei die von den Lagern (7) des Schlittens (2) getragenen Spindeln (8) in der senkrechten Richtung durch Verbindung mit einem doppelwirkenden Zylinder (9) beweglich sind; die Mittel zum vorübergehenden Greifen und Halten der Teile (P) bestehen aus Zangen (14) oder Klammern (15) aus einem Werkstoff mit elastischem Vermögen, sind zum federnden Eingreifen um die Rillen (P1) vorgesehen, die die zu schleifenden zylindrischen Auflageflächen (P2) von der Nabe (P3) der der Teile trennt, während ein mit einer Hülle (17) der Lager (7) festgemachter Sektor (16) über die Auflageflächen (P2) zum Freimachen der Teile von den Klammern durch Hochheben der Spindeln (8) allein gelegt wird; die von den Spindeln (8) gehaltenen Teile (P) werden im Queranschlag auf eine Leiste (18) gelegt und auf diese Leiste zur freien Drehbewegung gehalten, durch Abstützen auf die zu schleifenden Auflageflächen von dem profilierten Ende der Arme (21) die in die Verlegung und in die Höhe mittels Verbindung eines Zylinders (28) mit einer armtragenden Welle (23) beweglich sind, die von den beweglichen Lagern (25) und von den auf Rampen (27) rollenden Laufrollen (26) getragen wird; wobei das Mittel zum Auswählen und Verteilen der Werkstücke zwischen einem Magazin (29) und der ersten Spindel zum Greifen der Teile zwischengelegt wird.

2. Vorrichtung nach Anspruch 1, dadurch gekennzeichnet, dass die Spindeln (8), an dem freien Ende derselben, mit Dauermagneten zum Greifen oder Loslassen der zu schleifenden Teile (P) versehen sind.

3. Vorrichtung nach Anspruch 1, dadurch gekennzeichnet, dass der Schlitten vier Spindeln (8) zum Halten der Teile oder Werkstücke aufweist; dass die Seitenspindeln drehfest sind, während die zwei Mittelspindeln an derer Oberteil mit von einer Zahnradvorgelege (12) angetriebenen Zahnrädern (10, 11) versehen sind; und dass ein dieser Zahnräder (10) an einen abgestuften Motor (13) angeschlossen ist, der für den Antrieb in auf 120 °C begrenzten Drehbewegungen der zu schleifenden Teile bestimmt ist, damit eine der Auflageflächen (P2) in die Schleifstellung vorgebracht wird.

4. Vorrichtung nach Anspruch 3, dadurch gekennzeichnet, dass eine Zelle auf der Leiste (18) in Fluchtlinie mit einer Mittelspindel oder auch mit dem zweiten Scheibenpaar angebracht ist, um durch Glanzwirkung die Richtung abzutasten, in welcher die besagte Spindel für das richtige Vorbringen der dritten zu schleifenden Auflagefläche sich umdrehen muss.

5. Vorrichtung nach Anspruch 1, dadurch gekennzeichnet, dass die in beliebiger Stellung stillstehenden Werkstücke, nach dem Abschleifen der Auflageflächen, automatisch mittels unter den Werkstücken entsprechend angebrachter auseinanderlaufenden Gebläse (36) zum Erleichtern der Abnahme durch die Greiferorgane flachgelegt werden, wobei die waagrechte Stellung durch Anzeiger kontrolliert wird, die die Abwärtsbewegung des Schlittens betätigen.

6. Vorrichtung nach Anspruch 1, dadurch gekennzeichnet, dass das Mittel zum Auswählen der Werkstücke aus einem senkrechten Magazin (29) besteht, in welchem die Werkstücke über einem mittels Zylinder (32) oder ähnliches verschwenkbaren Verschlussorgan (30) flach aufgestapelt sind, damit ein Werkstück durch Überdecken der Magazinöffnungen nach der Formgebung des Werkstücks mit auf feststehenden Ringen (31) vorgesehenen ähnlichen Öffnungen wiederkehrend freigemacht wird, wobei das Verschlussorgan zwischen den feststehenden Ringen verschwenkt wird.

7. Vorrichtung nach Ansprüchen 1 und 6 zusammen, dadurch gekennzeichnet, dass das Mittel zum Freimachen der von dem Verschlussorgan des Magazins (29) aus einem unter dem Magazin (29) befindlichen Nachen (34) besteht, der zur Aufnahme und Teilung der Teile mit einer Auflagefläche in Parallelstellung mit der Achse der Scheiben ausgestaltet ist, wobei der besagte Nachen (34) in Fluchtlinie mit der Spindel oder mit der ersten Spindel durch einen Zylinder (35) oder ähnliches Organ gebracht wird.

8. Vorrichtung nach einem der Ansprüche 1 bis 7, dadurch gekennzeichnet, dass die zyklische Arbeitsweise für das Abschleifen dreier Werkstücke und die Handlung vier Werkstücke ausgeführt ist und die folgenden Vorgänge nacheinander umfasst: Abwärtsbewegung des Schlittens (2) mit Abnahme eines durch den Nachen (34) gebrachten Teils und der drei abgeschliffenen Teile, wobei die durch die Leiste (18) getragenen Abstützarme (21) angehoben sind; Aufwärtsbewegung des Schlittens (2) mit den vier Teilen, die von den Spindeln (8) gehalten sind; dann Verlegung des Schlittens (2) um die erste Spindel in Fluchtlinie mit dem ersten Scheibenpaar zu bringen, und Drehbewegung der Mittelspindeln für das Orientieren; Abwärtsbewegung des Schlittens (2) um die drei zu schleifenden Teile auf die Leiste (18) zu legen, wo sie durch die Arme (21) in gesenkter Stellung gehalten sind; Freimachen der Teile, wobei letzterer völlig abgeschliffen ist, durch Aufwärtsbewegung der Spindeln allein; Aufwärtsbewegung und Verlegung des Schlittens (2) für die Rückfahrt desselben in die Ausgangsstellung; Abschleifen der Teile; Flachorientieren der abgeschliffenen Teile; Abwärtsbewegung des Schlittens (2), um die abgeschliffenen Teile und den von dem Nachen gebrachten neuen Teil zu fassen, und so weiter.

FIG.1

0 017 601

FIG. 2

FIG. 3

FIG.4

FIG.8

FIG.9

FIG.7

FIG.6

FIG.5

0 017 601

FIG.12

FIG.10

FIG.11

15

FIG.13

FIG.14

FIG.15

FIG.16

0 017 601

FIG.17

FIG.18

FIG.19

FIG.20